# EUROPÄISCHE PATENTANMELDUNG

(11) **EP 4 838 778 A1**
(43) Veröffentlichungstag der Anmeldung: **11.11.2026**
(21) Anmeldenummer: 26177263.6
(22) Anmeldetag: 07.05.2026
(51) Int. Cl.: H02P 29/024, B60L 3/04, H02P 3/18, H02P 3/22, H02P 6/24, H02P 23/00, H02P 29/032

(54) **VERFAHREN ZUM BETREIBEN EINER ELEKTROANTRIEBSVORRICHTUNG**

(30) Priorität: 08.05.2025 DE 102025117700
(71) Anmelder: Volkswagen Aktiengesellschaft, 38440 Wolfsburg (DE)
(72) Erfinder: Gong, Xun, 38440 Wolfsburg (DE); Tian, Shan, 38440 Wolfsburg (DE)
(74) Vertreter: Bals & Vogel Patentanwälte PartGmbB

(57) **Zusammenfassung**

Die Erfindung betrifft ein Verfahren zum Betreiben einer Elektroantriebsvorrichtung (201), ein Fahrzeug (200), ein Computerprogrammprodukt und einen computerlesbaren Datenträger.

## Beschreibung

Die Erfindung betrifft ein Verfahren, ein Fahrzeug, ein Computerprogrammprodukt sowie einen computerlesbaren Datenträger.

Elektromotoren in Elektroantriebsvorrichtungen von Fahrzeugen werden üblicherweise mit einem Dreiphasenwechselstrom betrieben. Zu einer Bereitstellung des Dreiphasenwechselstroms weisen insbesondere Elektroantriebsvorrichtungen Wechselrichtereinrichtungen auf, welche dazu vorgesehen sind, eine Gleichspannung eines Zwischenkreises der Elektroantriebsvorrichtung in den Dreiphasenwechselstrom zum Betreiben des Elektromotors umzuwandeln. In einem Fehlerfall eines Betriebs der Elektroantriebsvorrichtung ist es erforderlich, den Elektromotor in einem Betriebsmodus zu betreiben, der als sicherer Zustand bezeichnet wird. In diesem werden bevorzugt abrupte Änderungen des Drehmoments vermieden. Andernfalls kann die Elektroantriebsvorrichtung, beispielsweise die Wechselrichter, Schaden nehmen. Dies kann die Sicherheit reduzieren und/oder Kosten verursachen. Bekannt ist dabei die DE 10 2022 103 848 A1.

Der Stand der Technik weist dabei Nachteile auf. So kann ein Zeitintervall für einen Freilauf des Elektromotors nicht oder nicht genau genug ermittelt werden. Es kann auch vorgesehen sein, dass eine sensorische Erfassung ungünstig ist, beispielsweise indem diese eine direkte galvanische Verbindung erfordert. Es kann vorgesehen sein, dass kein Notfallbetrieb und/oder keine Redundanz vorgesehen ist/sind. Dabei kann es insbesondere wünschenswert sein, dass die Elektroantriebsvorrichtung und/oder deren Bestandteile eine hohe Sicherheit aufweisen.

Es ist daher eine Aufgabe der vorliegenden Erfindung, wenigstens einen der voranstehend beschriebenen Nachteile zumindest teilweise zu überwinden. Insbesondere ist es Aufgabe der Erfindung Sicherheit, Robustheit und/oder Redundanz zu optimieren.

Die voranstehende Aufgabe wird gelöst durch ein Verfahren gemäß einem ersten Aspekt der vorliegenden Erfindung, durch ein Fahrzeug gemäß einem zweiten Aspekt der vorliegenden Erfindung, durch ein Computerprogrammprodukt gemäß einem dritten Aspekt der vorliegenden Erfindung sowie durch einen computerlesbaren Datenträger gemäß einem vierten Aspekt der vorliegenden Erfindung. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Fahrzeug und/oder im Zusammenhang mit dem erfindungsgemäßen Computerprogrammprodukt und/oder im Zusammenhang mit dem erfindungsgemäßen computerlesbaren Datenträger und jeweils umgekehrt, sodass bezüglich der Offenbarung zu den einzelnen Erfindungsaspekten stets wechselseitig Bezug genommen wird bzw. werden kann. Insbesondere gelten Vorteile, die im Rahmen des ersten, zweiten, dritten und/oder vierten Aspekts beschrieben werden, auch jeweils für den ersten, zweiten, dritten und/oder vierten Aspekt.

Gemäß einem ersten Aspekt betrifft die vorliegende Erfindung ein Verfahren zum Betreiben einer Elektroantriebsvorrichtung, insbesondere eines Fahrzeugs, die Elektroantriebsvorrichtung aufweisend:
- einen Elektromotor, z. B. einen Asynchronmotor (ASM), einen Permanentmagnet-Synchronmotor (PMSM) und/oder eine elektrisch erregte Synchronmaschine (EESM),
- eine Wechselrichtereinrichtung, insbesondere aufweisend zumindest zwei, vier oder sechs (z. B. paarweise als Brücke verschaltete) Wechselrichter, die eingerichtet ist eine, insbesondere dreiphasige, Wechselspannung an den Elektromotor bereitzustellen (um diesen anzutreiben),
- einen Sensor, der eingerichtet ist ein Sensorsignal bereitzustellen, dass insbesondere spezifisch ist für eine Drehgeschwindigkeit des Elektromotors, insbesondere (eine Drehgeschwindigkeit) eines Rotors des Elektromotors,
das Verfahren aufweisend:
- Empfangen, durch eine Steuereinheit, eines Sicherungssignals, welches die Steuereinheit zum Betreiben des Elektromotors in einem, insbesondere vorbestimmten und/oder gespeicherten, sicheren Betriebsmodus veranlasst,
- Messen, insbesondere durch den Sensor, eines Sensorsignals, das spezifisch und/oder abhängig ist für eine Drehgeschwindigkeit des Elektromotors,
- Berechnen, durch die Steuereinheit, eines Zeitintervalls für einen Freilauf des Elektromotors, insbesondere in Abhängigkeit von dem Sensorsignal,
- Betreiben, durch die Steuereinheit, der Elektroantriebsvorrichtung, insbesondere in Abhängigkeit von dem Zeitintervall.

Das Verfahren gemäß dem ersten Aspekt kann dabei (zumindest teilweise) computerimplementiert sein und/oder wiederholt durchgeführt werden. Vorteilhafterweise kann bei dem Verfahren zumindest einer der beschriebenen Schritte durchgeführt werden, wobei die Schritte bevorzugt nacheinander in der angegebenen Reihenfolge oder alternativ in einer abweichenden beliebigen Reihenfolge durchgeführt werden, und ggf. auch einzelne Schritte wiederholt werden können. Vorzugsweise kann das Verfahren bei, vor und/oder (bevorzugt) während eines Betreibens bzw. einer Benutzung eines Fahrzeugs, einer Elektroantriebsvorrichtung und/oder einer Steuereinheit durchgeführt werden. Ein Betreiben kann dabei auch ein (manuelles) Fahren, ein autonomes Fahren und/oder ein (zumindest teilweise) automatisiertes Fahren aufweisen. Es kann vorgesehen sein, dass das Verfahren zumindest teilweise im Rahmen eines Tests, einer Inbetriebnahme und/oder Wartung durchgeführt wird. Es ist denkbar, dass das Verfahren beispielsweise durchgeführt wird, während ein Fahrzeug und/oder eine Elektroantriebsvorrichtung im Rahmen einer Prüfung, Inspektion und/oder Erneuerung (general-) überholt wird. Dabei kann eine Steuereinheit das Verfahren (zumindest teilweise) implementieren, beispielsweise durch (kombiniertes) Durchführen der (oben genannten) Schritte und/oder Ansteuern und/oder Regeln entsprechender Komponenten (z. B. der Wechselrichtereinrichtung und/oder entsprechenden Schaltern).

Ein Fahrzeug kann im Rahmen der Erfindung ein Kraftfahrzeug und/oder Lastkraftfahrzeug umfassen. Dabei kann ein Fahrzeug eingerichtet sein für ein Betreiben, insbesondere für ein autonomes und/oder (zumindest teilweise) automatisiertes Fahren. Beispielsweise kann das Fahrzeug als elektrisches Fahrzeug ausgestaltet sein.

Das Empfangen, durch eine Steuereinheit, eines Sicherungssignals, welches die Steuereinheit zum Betreiben des Elektromotors in einem, insbesondere vorbestimmten und/oder gespeicherten, sicheren Betriebsmodus veranlasst, kann dabei beispielsweise von einer (anderen) Zonensteuereinheit und/oder eines beliebigen Sensors und/oder Bauteils des Fahrzeugs an die Steuereinheit übermittelt werden. So kann beispielsweise ein technischer Defekt, z. B. ein Kabelbrand, an einem sicherheitsrelevanten Bauteil, etwa einem Energiespeicher (z. B. der Batterie des Fahrzeugs) erkannt werden (z. B. sensorisch). Dadurch kann ein Sicherungssignal ausgelöst, übermittelt und/oder empfangen werden. Durch und/oder nach Empfangen des Sicherungssignals kann die Steuereinheit einen (ggf. von mehreren) sicheren Betriebsmodus (sichere Betriebsmodi) implementieren und/oder durchführen, welcher vorzugsweise (im Vorfeld, etwa im Rahmen der Fertigung) vorbestimmt und/oder gespeichert wird/wurde. Beispielsweise kann dies ein Betreiben (siehe unten) umfassen.

Das Messen, insbesondere durch den Sensor, eines Sensorsignals, das spezifisch ist für eine und/oder abhängig ist von einer Drehgeschwindigkeit des Elektromotors, kann dabei ein analoges Signal, beispielsweise Spannung und/oder Strom, aufweisen, welches vorzugsweise zumindest abschnittsweise (zeitlich) oszilliert. Es kann (anschließend) ein Übermitteln des Sensorsignals von dem Sensor an die Steuereinheit erfolgen (z. B. über eine elektrische Leitung). Der Sensor kann dabei zum Messen des Sensorsignals eingerichtet sein. Dabei kann das Sensorsignal vorzugsweise spezifisch sein für eine Drehgeschwindigkeit (der Rotation) des Elektromotors und/oder Rotors des Elektromotors. Das Sensorsignal kann insbesondere (zumindest abschnittsweise) periodisch, beispielsweise sinusförmig und/oder cosinusförmig, ausgestaltet sein, vorzugsweise in Abhängigkeit von der Rotation des Elektromotors und/oder eines Rotors des Elektromotors. Besonders vorteilhaft kann dies sein, da sich der Elektromotor, insbesondere auch in einem Freilauf, (noch) weiterdrehen kann, insbesondere auch dann, wenn (überhaupt) kein Strom mehr an diesem (durch die Elektroantriebsvorrichtung bzw. die Wechselrichtereinrichtung) anliegt und/oder an diesen bereitgestellt wird (etwa aufgrund des sicheren Betriebsmodus und/oder Freilaufs). Dadurch kann sich ein besonderer Vorteil (und/oder Unterschied) im Vergleich zu einem Messen von Strom und/oder Spannung, insbesondere von an den Elektromotor bereitgestellten Strom und/oder Spannung, ergeben. So kann beispielsweise bei einem Asynchronmotor (ASM) der Strom und/oder die Spannung (an diesem) im Freilauf direkt und/oder (quasi) instantan verschwinden und/oder auf Null abfallen, insbesondere obwohl sich der Elektromotor und/oder der Rotor des Elektromotors (weiterhin) dreht.

Das Berechnen, durch die Steuereinheit, eines Zeitintervalls für einen Freilauf des Elektromotors und/oder Rotors, vorzugsweise in Abhängigkeit von dem Sensorsignal, kann insbesondere ein absolutes Zeitintervall (z. B. 200 ms) bereitstellen. Der Freilauf kann über und/oder während des Zeitintervalls stattfinden, implementiert werden und/oder aufrechterhalten werden. Es kann vorgesehen sein, dass ein Freilauf, insbesondere bei und/oder mit und/oder nach dem Empfangen eines Sicherungssignals von der Steuereinheit (unmittelbar und/oder direkt) initiiert wird. Es kann vorgesehen sein, dass das Zeitintervall in der Steuereinheit vordefiniert und/oder ein (initialer) Wert (z. B. 300 ms) (vor-)eingespeichert ist, und vorzugsweise anschließend angepasst und/oder im Rahmen des Berechnens fortgeführt oder beendet wird. Das Berechnen kann dabei dafür spezifisch sein, ob das Zeitintervall und/oder der Freilauf fortgeführt oder beendet/abgebrochen wird (siehe unten).

Das Betreiben, durch die Steuereinheit, der Elektroantriebsvorrichtung, insbesondere in Abhängigkeit von dem Zeitintervall, kann dabei ein Implementieren eines oder mehrerer Sicherheitsmechanismen und/oder Sicherheitsmaßnahmen (durch die Steuereinheit) umfassen. Dabei kann die Steuereinheit beispielsweise Steuersignale an Aktuatoren übermitteln, um diese vorzugsweise anzusteuern und/oder zu Regeln. So kann beispielsweise eine Notbremsung initiiert werden. Es kann auch eine Warnmeldung an den Fahrer ausgegeben werden.

Die Elektroantriebsvorrichtung kann einen Zwischenkreis aufweisen, der zum Bereitstellen einer Gleichspannung, insbesondere aus einem Energiespeicher (etwa einer Batterie und/oder eines Akkumulators) an die Wechselrichtereinrichtung eingerichtet ist. Der Zwischenkreis kann dabei zumindest einen Kondensator aufweisen. Dabei kann/können die Elektroantriebsvorrichtung und/oder das Fahrzeug einen Energiespeicher (etwa einer Batterie und/oder eines Akkumulators) aufweisen. Durch den Zwischenkreis und/oder die Wechselrichtereinrichtung kann Gleichstrom und/oder Gleichspannung des Energiespeichers in, insbesondere dreiphasigen, Wechselstrom und/oder Wechselspannung gewandelt werden. Die Wechselrichtereinrichtung kann dabei, insbesondere einen, zwei, vier oder sechs, Wechselrichter aufweisen, welche schaltbar sind, z. B. über die Steuereinheit. Die Steuereinheit kann die Wechselrichtereinrichtung, insbesondere den oder die Wechselrichter, (etwa beim Betreiben) ansteuern und/oder Regeln. In und/oder für einen Freilauf kann die Wechselrichtereinrichtung einen Stromfluss (durch sie) sperren. Insbesondere nach einem Freilauf und/oder während eines aktiven Kurzschlusses, kann die Wechselrichtereinrichtung, insbesondere durch (Durch-)Schalten (Stromfluss herstellen) zumindest eines, des oder der Wechselrichter, ein Entladen und/oder einen Ladungsausgleich ermöglichen.

Im Rahmen der Erfindung kann es von Vorteil sein, dass das Messen, ein induktives Messen aufweist und/oder induktionsbasiert durchgeführt wird, wobei insbesondere der Sensor, und insbesondere ein weiterer Sensor, als induktiver Sensor und/oder Positionssensor ausgestaltet ist, welcher vorzugsweise zumindest teilweise in einem Gehäuse und/oder an einer Drehwelle des Elektromotors angeordnet ist.

Es kann vorgesehen sein, dass der Sensor einen induktiven Sensor umfasst, welcher ein, insbesondere periodisches, beispielsweise sinusförmiges, Sensorsignal in Abhängigkeit von der Rotation eines Rotors des Elektromotors erzeugt. Durch ein induktives Messen, insbesondere an oder nahe des Elektromotors, kann dabei die Robustheit und/oder Zuverlässigkeit erhöht werden. Es kann auch vorgesehen sein, dass (dabei/dadurch) keine (direkte) galvanische Verbindung nötig ist, insbesondere zwischen Sensor und Elektromotor, Wechselrichtereinrichtung und/oder Zwischenschaltung. Somit kann insgesamt die Sicherheit, Zuverlässigkeit und/oder Robustheit erhöht werden. Dabei kann der Sensor in und/oder am Gehäuse des Elektromotors angeordnet sein. Dabei kann der Sensor in und/oder an der Drehwelle des Elektromotors angeordnet sein. Somit kann das Messen des Sensorsignals durch den Sensor an dem und/oder nahe des Elektromotors, insbesondere des Rotors, durchgeführt werden.

Im Rahmen der Erfindung ist es denkbar, dass das Berechnen durch die Steuereinheit umfasst:
- Ermitteln einer Rotationsfrequenz und/oder Rotationsgeschwindigkeit des Elektromotors, insbesondere des Rotors, welche insbesondere durch Anfitten einer periodischen Funktion (z. B. sinus und/oder cosinus), vorzugsweise an das Sensorsignal und/oder das weitere Sensorsignal, und/oder Mustererkennung ermittelt wird, in Abhängigkeit von
   ∘ dem Sensorsignal des Sensors und/oder
   o eines weiteren Sensorsignals eines weiteren Sensors, welcher insbesondere gegenüber dem Sensor versetzt und/oder verdreht angeordnet ist, beispielsweise um 45° bezüglich einer Drehwelle des Elektromotors.

Dabei kann vorzugsweise die Rotationsfrequenz und/oder Rotationsgeschwindigkeit spezifisch sein für die Drehgeschwindigkeit des Elektromotors. Mit anderen Worten kann dadurch und/oder über diese die Drehgeschwindigkeit gemessen und/oder charakterisiert werden. Es kann vorgesehen sein, dass ein Sensor ein Sensorsignal bereitstellt. Dabei kann insbesondere basierend auf dem Sensorsignal auf zumindest zwei unterschiedlichen Wegen ein Berechnen erfolgen. Dabei kann das Ermitteln einer Rotationsfrequenz und/oder Rotationsgeschwindigkeit in Abhängigkeit von dem Sensorsignal erfolgen. Alternativ oder (bevorzugt) zusätzlich kann ein Berechnen in Abhängigkeit von dem Spannungsausgangssignal (der Analogschaltung erfolgen). Dadurch kann eine Redundanz bereitgestellt werden. Dadurch kann die Sicherheit und/oder Robustheit verbessert werden. Es kann auch vorgesehen sein, dass ein Sensor ein Sensorsignal bereitstellt und ein weiterer Sensor ein weiteres Sensorsignal. Beispielsweise können der Sensor und der weitere Sensor um einen Winkel, z. B. 45°, (etwa relativ zu dem Elektromotor, dem Rotor und/oder einer Drehwelle) versetzt sein. Dadurch können zwei unabhängige Signale bereitgestellt werden, was insbesondere die Redundanz und/oder Sicherheit (weiter erhöht). Dabei kann das Ermitteln einer Rotationsfrequenz und/oder Rotationsgeschwindigkeit in Abhängigkeit von dem Sensorsignal und/oder weiteren Sensorsignalen erfolgen. Alternativ oder (bevorzugt) zusätzlich kann ein Berechnen in Abhängigkeit von dem Spannungsausgangssignal (der Analogschaltung erfolgen) in Abhängigkeit von dem weiteren Sensorsignal und/oder Sensorsignal erfolgen. Es kann vorgesehen sein, dass das Ermitteln in Abhängigkeit von dem Sensorsignal erfolgt und das Berechnen in Abhängigkeit von dem weiteren Sensorsignal (oder umgekehrt). Dabei bzw. dadurch kann die Redundanz und/oder Sicherheit weiter erhöht werden. Dadurch kann insbesondere eine ASIL-Sicherheit (Automotive Safety Integrity Level) ermöglicht werden. Die Rotationsfrequenz und/oder Rotationsgeschwindigkeit kann beispielsweise über die Periode der Fitfunktion ermittelt werden. Es kann auch vorgesehen sein, dass dies (z. B. im Rahmen der Mustererkennung) über eine Look-up Tabelle (welche im Rahmen der Inbetriebnahme erstellt wird) erfolgt.

Es kann im Rahmen der Erfindung vorgesehen sein, dass das Berechnen, durch die Steuereinheit, insbesondere eines Zeitintervalls für einen Freilauf des Elektromotors, ein Vergleichen der Rotationsfrequenz und/oder Rotationsgeschwindigkeit mit einem Rotationsschwellwert umfasst, wobei insbesondere
- das Zeitintervall, insbesondere um einen diskreten Zeitschritt, verlängert wird, wenn der Rotationsschwellwert nicht erreicht oder unterschritten wird, oder
- das Zeitintervall beendet wird, wenn der Rotationsschwellwert erreicht oder unterschritten wird.

Die Rotationsfrequenz und/oder Rotationsgeschwindigkeit kann, insbesondere während eines Freilaufs, (kontinuierlich) abnehmen. Demnach kann ein Betreiben, insbesondere ein (sicheres) Beenden des Freilaufs und/oder Starten/Durchführen eines Entladens bzw. aktiven Kurzschlusses, erfolgen, insbesondere dann, wenn ein Rotationsschwellwert und/oder ein Spannungsschwellwert erreicht oder unterschritten werden. Der Zeitschritt kann in Abhängigkeit von einer Sampling-Rate der Steuereinheit und/oder des Sensorsignals ermittelt und/oder definiert sein, z. B. kann der Zeitschritt 1 ms aufweisen.

Es ist ferner denkbar, dass die Elektroantriebsvorrichtung aufweist:
- eine (analoge) Analogschaltung an welche das Sensorsignal von dem Sensor, oder insbesondere ein weiteres Sensorsignal eines weiteren Sensors, bereitgestellt wird, wobei die Analogschaltung dazu eingerichtet ist, in Abhängigkeit von dem Sensorsignal, und/oder insbesondere dem weiteren Sensorsignal, insbesondere fortwährend, ein, vorzugsweise analoges, Spannungsausgangssignal zu erzeugen, welches insbesondere spezifisch ist für eine Rotationsgeschwindigkeit und/oder Rotationsfrequenz des Elektromotors,
das Verfahren aufweisend:
- Erzeugen, durch die Analogschaltung, in Abhängigkeit von dem Sensorsignal, und/oder insbesondere dem weiteren Sensorsignal, eines, vorzugsweise analogen, Spannungsausgangssignals, und insbesondere
- Übermitteln des Spannungsausgangssignals von der Analogschaltung an die Steuereinheit, z. B. über eine elektrische Leitung.

Auch ist es denkbar, dass die Analogschaltung einen Wandler aufweist, insbesondere einen Frequenz-Spannungs-Wandler, welcher eingerichtet ist, insbesondere in Abhängigkeit von dem Sensorsignal, und/oder insbesondere dem weiteren Sensorsignal, das Spannungsausgangssignal bereitzustellen, wobei beispielsweise ein (zeitabhängiges) Integrieren des Sensorsignals, oder insbesondere des weiteren Sensorsignals, durchgeführt wird.

Dabei kann ein Integrieren ein (Auf-)Integrieren und/oder Aufaddieren von elektrischer Ladung umfassen, welche für das Sensorsignal und/oder weitere Sensorsignal spezifisch ist. Die Analogschaltung und/oder der Wandler können dabei beispielsweise einen integrierten Schaltkreis, z. B. einen Integrationsschaltkreis, aufweisen, insbesondere einen timer-IC und/oder NE555, z. B. im monostabilen Betrieb ("monostable mode"). Alternativ oder zusätzlich kann dies durch einen Operationsverstärker und/oder zumindest einen Kondensator durchgeführt werden. Die über einen bestimmten Zeitraum akkumulierte Ladung kann dabei proportional zur Frequenz des Messsignals ausgestaltet sein. Dabei kann das Spannungsausgangssignal als, insbesondere analoge, (Ausgangs-)Spannung bereitgestellt werden.

Im Rahmen der Erfindung ist es optional möglich, dass, insbesondere nach einem Übermitteln des Spannungsausgangssignals an die Steuereinheit, die Steuereinheit, insbesondere zusätzlich und/oder redundant zu dem Berechnen, durchführt:
- Berechnen, durch die Steuereinheit, eines(/des) (weiteren) Zeitintervalls für einen Freilauf des Elektromotors in Abhängigkeit von dem Spannungsausgangssignal, wobei insbesondere ein Vergleichen des Spannungsausgangssignals mit einem (voreingespeicherten und/oder spezifischen) Spannungsschwellwert durchgeführt wird, wobei beispielsweise
   ∘ ein negativer Spannungsvergleichswert ausgegeben wird, und insbesondere das (weitere) Zeitintervall, insbesondere um einen diskreten Zeitschritt, verlängert wird, wenn der Spannungsschwellwert nicht erreicht oder überschritten wird, oder
   ∘ ein positiver Spannungsvergleichswert ausgegeben wird, und insbesondere das (weitere) Zeitintervall beendet wird, wenn der Spannungsschwellwert erreicht oder unterschritten wird.

Mit anderen Worten kann eine weitere, alternative und/oder redundante Berechnung des/eines (weiteren) Zeitintervalls ermöglicht werden. Dies kann die Robustheit, Sicherheit und/oder Redundanz verbessern. Es kann auch vorgesehen sein, dass das Zeitintervall in Abhängigkeit von dem Ermitteln und/oder dem Berechnen bestimmt wird. Somit kann vorteilhafterweise die Robustheit erhöht werden, wenn beide Möglichkeiten verwendet werden. Die Sicherheit und/oder Redundanz kann ermöglicht werden, wenn zumindest das Ermitteln oder das Berechnen verwendet wird, beispielsweise in einem Notbetrieb, bei welchem nur eine der Möglichkeiten funktioniert (z. B., wenn die Analogschaltung kein Spannungsausgangssignal an die Steuereinheit bereitstellt, und diese das insbesondere erkennt).

Ferner kann es im Rahmen der Erfindung vorgesehen sein, dass (entweder)
- das Zeitintervall, insbesondere um einen diskreten Zeitschritt, verlängert wird, wenn
   ∘ bei dem Vergleichen der Rotationsschwellwert nicht erreicht oder unterschritten wird, und (zusätzlich)
   ∘ bei dem Vergleichen ein negativer Spannungsvergleichswert ausgegeben wird, oder
- das Zeitintervall beendet wird, wenn
   ∘ bei dem Vergleichen der Rotationsschwellwert erreicht oder unterschritten wird, und (zusätzlich)
   ∘ bei dem Vergleichen der Spannungsschwellwert erreicht oder unterschritten wird.

Demnach kann das Zeitintervall verlängert werden, wenn beide Möglichkeiten bzw. das jeweilige Vergleichen eine ausreichende Reduktion (der Drehgeschwindigkeit bzw. der gespeicherten Energie in Rotor und/oder Stator) und/oder Dauer des Freilaufs ergeben. Andernfalls wird der Freilauf beibehalten, um vorteilhafterweise Schäden zu verhindern. Dadurch können die Sicherheit erhöht und/oder die Kosten reduziert werden.

In Bezug auf die vorliegende Erfindung ist es vorstellbar, dass die Steuereinheit eingerichtet ist, insbesondere vor einem Empfangen, durchzuführen:
- Ausgeben, durch die Steuereinheit, beispielsweise über einen analogen Testausgang der Steuereinheit, eines testweisen Sensorsignals, welches beispielsweise ein vordefiniertes und/oder erwartetes Frequenzspektrum (eines Sensorsignals und/oder weiteren Sensorsignals) aufweist und/oder das Sensorsignal (und/oder weitere Sensorsignale) simuliert, und insbesondere
- Empfangen, durch die Analogschaltung des testweisen Sensorsignals, und insbesondere
- Empfangen durch die Steuereinheit eines testweisen Spannungsausgangssignals von der Analogschaltung (welche dieses in Abhängigkeit von dem ihr zugeführten testweisen Sensorsignal bereitstellt), wobei die Steuereinheit anhand des testweisen Spannungsausgangssignals die Funktionalität der Analogschaltung überprüft, vorzugsweise bevor die Elektroantriebsvorrichtung verwendet wird.

Dadurch kann die Sicherheit erhöht werden. So kann beispielsweise ein Start und/oder eine Verwendung der Elektroantriebsvorrichtung verhindert und/oder gesperrt werden, wenn die Funktionalität der Analogschaltung nicht gewährleistet ist. Dies kann geprüft werden, indem ein oder mehrere testweise Sensorsignale an die Analogschaltung durch die Steuereinheit bereitgestellt werden. Die Steuereinheit kann, etwa in Abhängigkeit von einer während der Inbetriebnahme eingespeicherten Look-up Tabelle, überprüfen, ob das oder die testweisen Spannungsausgangssignal(e) einem Wert und/oder Wertebereich entspricht, der (bei voller Funktionsfähigkeit) erwartet werden würde. Mit anderen Worten kann diese einem Check-up vor dem Start entsprechen. Dabei können das testweise Sensorsignal und/oder das vordefinierte und/oder erwartete Frequenzspektrum in der Steuereinheit gespeichert werden, und insbesondere unabhängig von einem Sensor und/oder weiteren Sensor ausgestaltet sein. Demnach kann ohne und/oder unabhängig vom Sensor und/oder weiteren Sensor (oder deren Funktionalität) die Funktionalität der Analogschaltung geprüft werden.

Ferner ist es vorstellbar, dass das Empfangen, durch eine Steuereinheit, eines Sicherungssignals, welches die Steuereinheit zum Betreiben des Elektromotors in einem (vorbestimmten) sicheren Betriebsmodus veranlasst, umfasst:
- Initiieren eines Freilaufs der Elektroantriebsvorrichtung, insbesondere des Elektromotors der Elektroantriebsvorrichtung.

Demnach kann der sichere Betriebsmodus (das Initiieren von) einem Freilauf umfassen. Demnach kann unmittelbar bei und/oder nach Empfangen des Sicherungssignals, ein Freilauf beginnen und/oder gestartet und/oder initiiert werden. Ein Freilauf kann beispielsweise durch Ansteuern der Wechselrichtereinrichtung erfolgen, beispielsweise indem (alle) Wechselrichter (Strom) sperren.

Im Rahmen der Erfindung kann es von Vorteil sein, dass das Betreiben, durch die Steuereinheit, die Elektroantriebsvorrichtung in Abhängigkeit von dem Zeitintervall umfasst:
- Initiieren eines Entlademodus und/oder eines aktiven Kurzschlusses in der Elektroantriebsvorrichtung, insbesondere, wenn das Zeitintervall beendet wird, wodurch vorzugsweise die Elektroantriebsvorrichtung, insbesondere der und/oder über den Zwischenkreis und/oder die Wechselrichtereinrichtung, zumindest teilweise entladen wird.

Dabei kann der sichere Betriebsmodus und/oder das Betreiben ein Initiieren von einem aktiven Kurzschluss umfassen (siehe unten). Dabei kann ein aktiver Kurzschluss vorzugsweise nach Beendigung des Freilaufs initiiert und/oder gestartet werden, beispielsweise indem die Steuereinheit die Wechselrichtereinrichtung ansteuert, wobei insbesondere zumindest ein, zwei, vier, sechs oder alle Wechselrichter durchgeschalten und/oder (strom-)leitend geschalten werden. Dabei kann die (verbleibende) elektrische Energie und/oder Ladung reduziert und/oder entfernt werden. Beispielsweise kann ein Kondensator (des Zwischenkreises) und/oder der Elektromotor (bzw. dessen Ladung) entladen werden. Dadurch kann die Sicherheit verbessert werden. Dadurch können (auch) Schäden vermieden werden, da insbesondere ein aktiver Kurzschluss (erst) erfolgt, wenn der Freilauf beendet wurde. Dabei kann entsprechend ein Ladungsausgleich stattfinden. Dadurch kann insbesondere die Elektroantriebsvorrichtung zumindest teilweise oder vollständig entladen und/oder stromlos geschaltet werden (insbesondere abgesehen von dem Energiespeicher und/oder redundanten Energiespeicher).

Im Rahmen der Erfindung ist es denkbar, dass die Elektroantriebsvorrichtung aufweist:
- einen redundanten Energiespeicher, insbesondere zusätzlich zu einem Energiespeicher der Elektroantriebsvorrichtung und/oder des Fahrzeugs, welcher für eine redundante Energieversorgung und/oder Notfallversorgung der Steuereinheit und/oder der Elektroantriebsvorrichtung eingerichtet ist, insbesondere des Sensors, des weiteren Sensors, der Analogschaltung und/oder der Wechselrichtereinrichtung,
insbesondere das Verfahren aufweisend:
- Initiieren, durch die Steuereinheit einer Energieversorgung durch den redundanten Energiespeicher, vorzugsweise in Abhängigkeit von dem Sicherungssignal, und/oder
- Unterbrechen, durch die Steuereinheit, einer elektrischen Verbindung zu dem Energiespeicher, wodurch vorzugsweise die Steuereinheit und/oder die Elektroantriebsvorrichtung von dem Energiespeicher elektrisch entkoppelt wird/werden.

Dadurch kann die Sicherheit, Redundanz und/oder Robustheit verbessert werden. Dadurch kann insbesondere sichergestellt werden, dass das Verfahren auch ermöglicht wird, wenn der Energiespeicher keine Versorgung bereitstellen kann. Das Verfahren kann demnach auch dann zu einer sicheren Abschaltung bzw. Entladung führen, wenn der Energiespeicher nicht funktionsfähig ist (z. B., wenn aufgrund von Defekt die Ursache des Sicherungssignals ist).

Gemäß einem zweiten Aspekt betrifft die vorliegende Erfindung ferner ein Fahrzeug mit einer Elektroantriebsvorrichtung und einer Steuereinheit, die so angepasst sind, dass sie die Schritte des Verfahrens gemäß dem ersten Aspekt ausführen.

Damit ergeben sich in Bezug auf ein erfindungsgemäßes Fahrzeug die gleichen Vorteile, wie sie bereits in Bezug auf ein erfindungsgemäßes Verfahren gemäß dem ersten Aspekt beschrieben worden sind.

Gemäß einem dritten Aspekt betrifft die vorliegende Erfindung ferner ein Computerprogrammprodukt, umfassend Befehle, die bei der Ausführung des Computerprogrammprodukts durch ein Fahrzeug gemäß dem zweiten Aspekt, das Verfahren gemäß dem ersten Aspekt implementieren.

Damit ergeben sich in Bezug auf ein erfindungsgemäßes Computerprogrammprodukt die gleichen Vorteile, wie sie bereits in Bezug auf ein erfindungsgemäßes Verfahren gemäß dem ersten Aspekt und/oder ein erfindungsgemäßes Fahrzeug gemäß dem zweiten Aspekt beschrieben worden sind.

Gemäß einem vierten Aspekt betrifft die vorliegende Erfindung ferner einen computerlesbaren Datenträger, auf dem das Computerprogrammprodukt gemäß dem dritten Aspekt gespeichert ist.

Damit ergeben sich in Bezug auf einen erfindungsgemäßen computerlesbaren Datenträger die gleichen Vorteile, wie sie bereits in Bezug auf ein erfindungsgemäßes Verfahren gemäß dem ersten Aspekt und/oder ein erfindungsgemäßes Fahrzeug gemäß dem zweiten Aspekt und/oder ein erfindungsgemäßes Computerprogrammprodukt gemäß dem dritten Aspekt beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen jeweils beispielhaft schematisch:
- Figur 1: ein Verfahren,
- Figur 2: eine Elektroantriebsvorrichtung,
- Figur 3: eine Analogschaltung, und
- Figur 4: ein Fahrzeug.

In den Figuren werden für die gleichen technischen Merkmale, auch von unterschiedlichen Ausführungsbeispielen, die identischen Bezugszeichen verwendet.

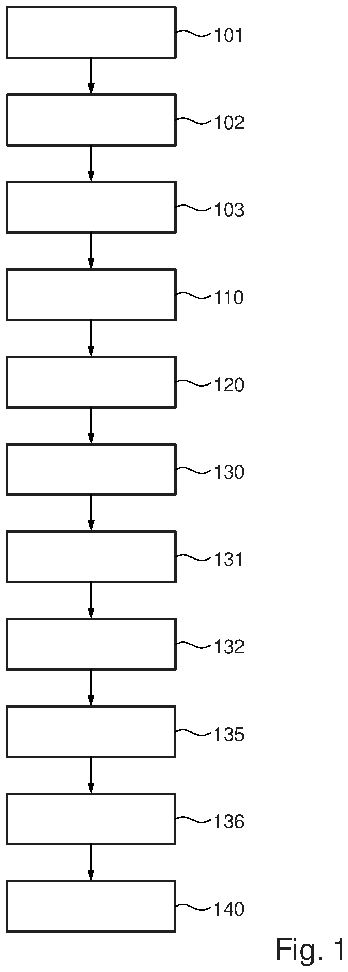

Fig. 1 zeigt beispielhaft ein Verfahren zum Betreiben 140 einer Elektroantriebsvorrichtung 201, insbesondere eines Fahrzeugs 200, die Elektroantriebsvorrichtung 201 aufweisend:
- einen Elektromotor 1,
- eine Wechselrichtereinrichtung 5, insbesondere aufweisend zumindest zwei Wechselrichter 6, die eingerichtet ist eine, insbesondere dreiphasige, Wechselspannung an den Elektromotor 1 bereitzustellen,
- einen Sensor 10, der eingerichtet ist ein Sensorsignal S10 bereitzustellen, dass spezifisch ist für eine Drehgeschwindigkeit des Elektromotors 1, insbesondere eines Rotors des Elektromotors 1,
das Verfahren aufweisend:
- Empfangen 110, durch eine Steuereinheit ECU, eines Sicherungssignals, welches die Steuereinheit ECU zum Betreiben 140 des Elektromotors 1 in einem sicheren Betriebsmodus veranlasst,
- Messen 120, insbesondere durch den Sensor 10, eines Sensorsignals S10, das spezifisch ist für eine Drehgeschwindigkeit des Elektromotors 1,
- Berechnen 130, durch die Steuereinheit ECU, eines Zeitintervalls für einen Freilauf des Elektromotors 1 in Abhängigkeit von dem Sensorsignal S10,
- Betreiben 140, durch die Steuereinheit ECU, der Elektroantriebsvorrichtung 201 in Abhängigkeit von dem Zeitintervall.

Im Rahmen der Erfindung kann es von Vorteil sein, dass das Messen 120, ein induktives Messen aufweist und/oder induktionsbasiert durchgeführt wird, wobei insbesondere der Sensor 10, und insbesondere ein weiterer Sensor 20, als induktiver Sensor und/oder Positionssensor ausgestaltet ist, welcher vorzugsweise zumindest teilweise in einem Gehäuse und/oder an einer Drehwelle des Elektromotors 1 angeordnet ist.

Im Rahmen der Erfindung ist es denkbar, dass das Berechnen 130 durch die Steuereinheit ECU umfasst:
- Ermitteln 131 einer Rotationsfrequenz und/oder Rotationsgeschwindigkeit des Elektromotors 1, welche insbesondere durch Anfitten einer periodischen Funktion und/oder Mustererkennung ermittelt wird, in Abhängigkeit von
   ∘ dem Sensorsignal S10 des Sensors 10 und/oder
   ∘ eines weiteren Sensorsignals S20 eines weiteren Sensors 20, welcher insbesondere gegenüber dem Sensor 10 versetzt und/oder verdreht angeordnet ist, beispielsweise um 45° bezüglich einer Drehwelle des Elektromotors 1.

Es kann im Rahmen der Erfindung vorgesehen sein, dass das Berechnen 130, durch die Steuereinheit ECU, eines Zeitintervalls für einen Freilauf des Elektromotors 1 ein Vergleichen 132 der Rotationsfrequenz und/oder Rotationsgeschwindigkeit mit einem Rotationsschwellwert umfasst, wobei insbesondere
- das Zeitintervall, insbesondere um einen diskreten Zeitschritt, verlängert wird, wenn der Rotationsschwellwert nicht erreicht oder unterschritten wird, oder
- das Zeitintervall beendet wird, wenn der Rotationsschwellwert erreicht oder unterschritten wird.

Es ist ferner denkbar, dass die Elektroantriebsvorrichtung 201 aufweist:
- eine Analogschaltung 50, an welche das Sensorsignal S10 von dem Sensor 10, oder insbesondere ein weiteres Sensorsignal S20 eines weiteren Sensors 20, bereitgestellt wird, wobei die Analogschaltung 50 dazu eingerichtet ist, in Abhängigkeit von dem Sensorsignal S10, oder insbesondere dem weiteren Sensorsignal S20, ein, vorzugsweise analoges, Spannungsausgangssignal U_out zu erzeugen, welches insbesondere spezifisch ist für eine Rotationsgeschwindigkeit und/oder Rotationsfrequenz des Elektromotors 1,
das Verfahren aufweisend:
- Erzeugen, durch die Analogschaltung 50, in Abhängigkeit von dem Sensorsignal S10, oder insbesondere dem weiteren Sensorsignal S20, eines, vorzugsweise analogen, Spannungsausgangssignals U_out, und insbesondere
- Übermitteln des Spannungsausgangssignals U_out von der Analogschaltung 50 an die Steuereinheit ECU.

Auch ist es denkbar, dass die Analogschaltung 50 einen Wandler 51 aufweist, insbesondere einen Frequenz-Spannungs-Wandler, welcher eingerichtet ist, insbesondere in Abhängigkeit von dem Sensorsignal S10, oder insbesondere dem weiteren Sensorsignal S20, das Spannungsausgangssignal U_out bereitzustellen, wobei beispielsweise ein Integrieren des Sensorsignals S10, oder insbesondere des weiteren Sensorsignals S20, durchgeführt wird.

Im Rahmen der Erfindung ist es optional möglich, dass, insbesondere nach einem Übermitteln des Spannungsausgangssignals U_out an die Steuereinheit ECU, die Steuereinheit ECU, insbesondere zusätzlich und/oder redundant zu dem Berechnen 130, durchführt:
- Berechnen 135, durch die Steuereinheit ECU, eines Zeitintervalls für einen Freilauf des Elektromotors 1 in Abhängigkeit von dem Spannungsausgangssignal U_out, wobei insbesondere ein Vergleichen 136 des Spannungsausgangssignals U_out mit einem Spannungsschwellwert durchgeführt wird, wobei beispielsweise
   ∘ ein negativer Spannungsvergleichswert ausgegeben wird, und insbesondere das Zeitintervall, insbesondere um einen diskreten Zeitschritt, verlängert wird, wenn der Spannungsschwellwert nicht erreicht oder überschritten wird, oder
   ∘ ein positiver Spannungsvergleichswert ausgegeben wird, und insbesondere das Zeitintervall beendet wird, wenn der Spannungsschwellwert erreicht oder unterschritten wird.

Ferner kann es im Rahmen der Erfindung vorgesehen sein, dass
- das Zeitintervall, insbesondere um einen diskreten Zeitschritt, verlängert wird, wenn
   ∘ bei dem Vergleichen 132 der Rotationsschwellwert nicht erreicht oder unterschritten wird, und
   ∘ bei dem Vergleichen 136 ein negativer Spannungsvergleichswert ausgegeben wird, oder
- das Zeitintervall beendet wird, wenn
   ∘ **bei dem** Vergleichen 132 der Rotationsschwellwert erreicht oder unterschritten wird, und
   ∘ bei dem Vergleichen 136 der Spannungsschwellwert erreicht oder unterschritten wird.

In Bezug auf die vorliegende Erfindung ist es vorstellbar, dass die Steuereinheit ECU eingerichtet ist, insbesondere vor einem Empfangen 110, durchzuführen:
- Ausgeben 101, durch die Steuereinheit ECU, beispielsweise über einen analogen Testausgang der Steuereinheit ECU, eines testweisen Sensorsignals S_test, welches beispielsweise ein vordefiniertes und/oder erwartetes Frequenzspektrum aufweist und/oder das Sensorsignal S10 simuliert, und insbesondere
- Empfangen 102, durch die Analogschaltung 50 des testweisen Sensorsignals S_test, und insbesondere
- Empfangen 103 durch die Steuereinheit ECU eines testweisen Spannungsausgangssignals von der Analogschaltung 50, wobei die Steuereinheit ECU anhand des testweisen Spannungsausgangssignals die Funktionalität der Analogschaltung 50 überprüft, vorzugsweise bevor die Elektroantriebsvorrichtung 201 verwendet wird.

Ferner ist es vorstellbar, dass das Empfangen 110, durch eine Steuereinheit ECU, eines Sicherungssignals, welches die Steuereinheit ECU zum Betreiben 140 des Elektromotors 1 in einem sicheren Betriebsmodus veranlasst, umfasst:
- Initiieren eines Freilaufs der Elektroantriebsvorrichtung 201, insbesondere des Elektromotors 1 der Elektroantriebsvorrichtung 201.

Im Rahmen der Erfindung kann es von Vorteil sein, dass das Betreiben 140, durch die Steuereinheit ECU, der Elektroantriebsvorrichtung 201 in Abhängigkeit von dem Zeitintervall umfasst:
- Initiieren eines aktiven Kurzschlusses in der Elektroantriebsvorrichtung 201, insbesondere wenn das Zeitintervall beendet wird, wodurch vorzugsweise die Elektroantriebsvorrichtung 201, insbesondere der und/oder über den Zwischenkreis 4 und/oder die Wechselrichtereinrichtung 5, zumindest teilweise entladen wird.

Im Rahmen der Erfindung ist es denkbar, dass die Elektroantriebsvorrichtung 201 aufweist:
- einen redundanten Energiespeicher, insbesondere zusätzlich zu einem Energiespeicher 2 der Elektroantriebsvorrichtung 201 und/oder des Fahrzeugs 200, welcher für eine redundante Energieversorgung und/oder Notfallversorgung der Steuereinheit ECU und/oder der Elektroantriebsvorrichtung 201 eingerichtet ist, insbesondere des Sensors 10, des weiteren Sensors 20, der Analogschaltung 50 und/oder der Wechselrichtereinrichtung 5,

insbesondere das Verfahren aufweisend:
- Initiieren, durch die Steuereinheit ECU einer Energieversorgung durch den redundanten Energiespeicher, vorzugsweise in Abhängigkeit von dem Sicherungssignal, und/oder
- Unterbrechen, durch die Steuereinheit ECU, einer elektrischen Verbindung zu dem Energiespeicher 2, wodurch vorzugsweise die Steuereinheit ECU und/oder die Elektroantriebsvorrichtung 201 von dem Energiespeicher 2 elektrisch entkoppelt wird/werden.

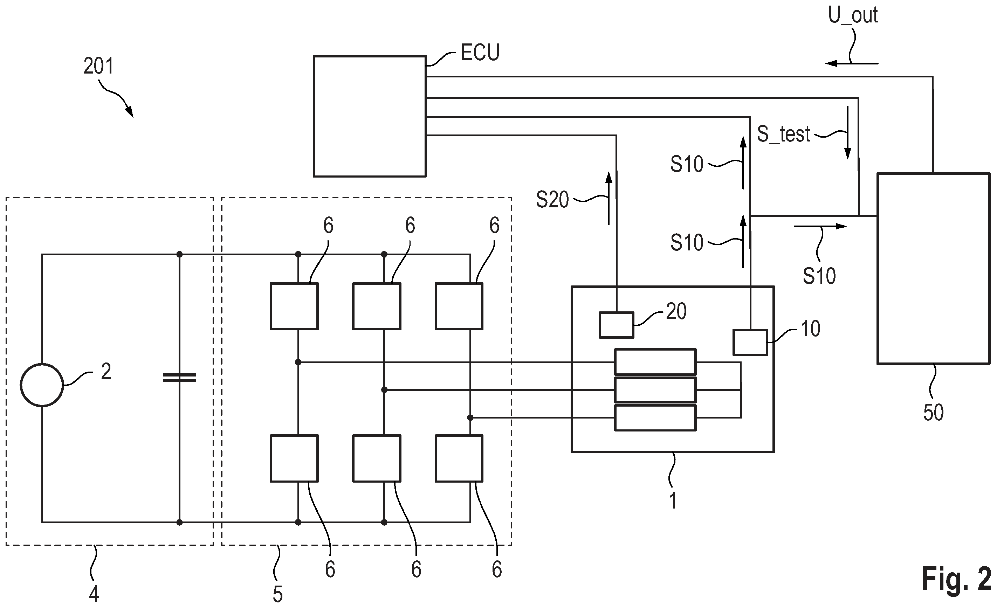

Fig. 2 zeigt beispielhaft eine Elektroantriebsvorrichtung 201, insbesondere eines Fahrzeugs 200, die Elektroantriebsvorrichtung 201 aufweisend:
- einen Elektromotor 1,
- einen Zwischenkreis 4, insbesondere aufweisend einen (elektrischen) Energiespeicher 2 und/oder einen Kondensator,
- eine Wechselrichtereinrichtung 5, insbesondere aufweisend zumindest zwei (hier sechs) Wechselrichter 6 (welche z. B. paarweise in Brücken zusammengefasst sein können), die eingerichtet ist eine, insbesondere dreiphasige, Wechselspannung an den Elektromotor 1 bereitzustellen,
- einen Sensor 10, der eingerichtet ist ein Sensorsignal S10 (an die Steuereinheit ECU und/oder Analogschaltung 50) bereitzustellen, dass spezifisch ist für eine Drehgeschwindigkeit des Elektromotors 1, insbesondere eines Rotors des Elektromotors 1,
- einen weiteren Sensor 20, der eingerichtet ist ein weiteres Sensorsignal S20 (an die Steuereinheit ECU und/oder Analogschaltung 50) bereitzustellen, und/oder
- eine Analogschaltung 50, welche insbesondere ein Spannungsausgangssignal U_out bereitstellt.

Wie zu sehen ist, kann der Zwischenkreis 4 und/oder der Kondensator (des Zwischenkreises 4) und/oder der Elektromotor 1 über die Wechselrichtereinrichtung 5, insbesondere zumindest zwei (in einer Brücke) angeordnete Wechselrichter 6 (wenn diese gleichzeitig durchschalten), über einen aktiven Kurzschluss, kurzgeschlossen und/oder entladen werden.

Dabei kann die Steuereinheit ECU jeweils über eine Leitung zur Datenkommunikation und/oder Übertragung von elektrischer Spannung und/oder Strom mit den übrigen Bauteilen, der Wechselrichtereinrichtung 5, insbesondere den Wechselrichtern 6, dem Sensor 10, der Analogschaltung 50, dem Zwischenkreis 4 und/oder dem weiteren Sensor 20 verbunden sein.

Dabei kann der Energiespeicher 2 (an die übrigen Bauteile) elektrische Energie, insbesondere Spannung und/oder Strom, bereitstellen.

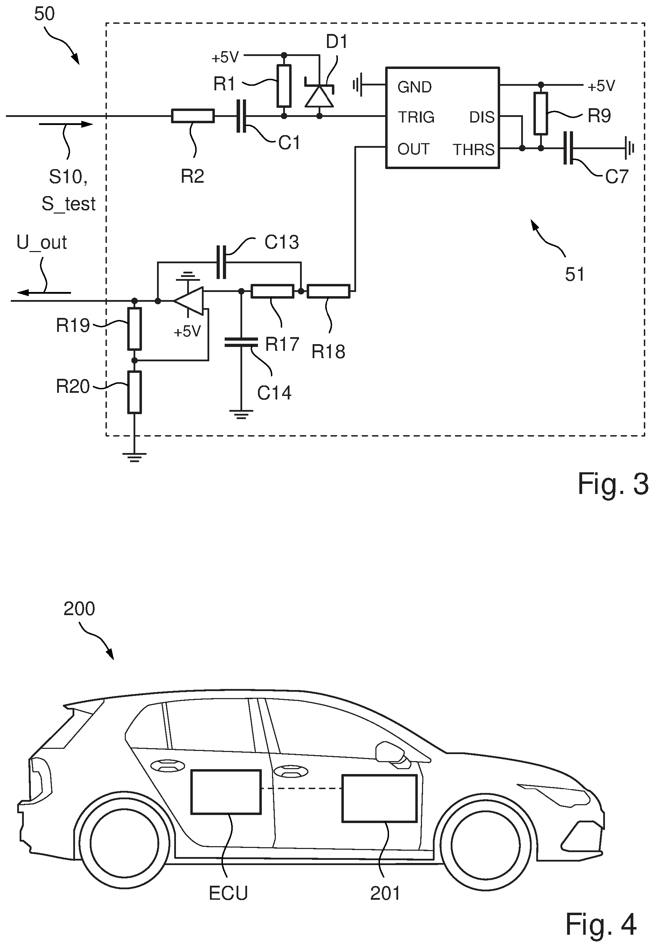

Fig. 3 zeigt beispielhaft eine Analogschaltung 50. Diese kann einen integrierten Schaltkreis aufweisen und/oder als solcher ausgeführt sein.

Dabei kann vorgesehen sein:
- C1 = 47 nF,
- C7 = 10 nF,
- C13 = 56 nF,
- C14 = 56 nF,
- D1, insbesondere eine Schottky-Diode, z. B. BAT54,
- R1 = 10 kOhm,
- R2 = 10 Ohm,
- R9 = 47 kOhm,
- R17 = 100 kOhm,
- R18 = 100 kOhm,
- R19 = 5600 Ohm,
- R20 = 10 kOhm,
- Wandler 51, z. B. NE555, wobei der Wandler 51 (zudem) die übrigen Bauteile und/oder die Schaltung um den Operationsverstärker (unten links) aufweisen kann, und/oder
- einen Operationsverstärker, z. B. AD8601.

Dabei ist es denkbar, dass die Analogschaltung 50 einen Wandler 51 aufweist, insbesondere einen Frequenz-Spannungs-Wandler, welcher eingerichtet ist, insbesondere in Abhängigkeit von dem Sensorsignal S10, und/oder insbesondere dem weiteren Sensorsignal S20 und/oder dem testweisen Sensorsignal S_test, das Spannungsausgangssignal U_out bereitzustellen, wobei beispielsweise ein Integrieren des Sensorsignals S10, des weiteren Sensorsignals S20 und/oder des testweisen Sensorsignals S_test durchgeführt wird.

Fig. 4 zeigt beispielhaft ein Fahrzeug 200 mit einer Elektroantriebsvorrichtung 201 und einer Steuereinheit ECU, welche datenkommunizierend verbunden sind.

### Bezugszeichenliste

- 1: Elektromotor
- 2: Energiespeicher
- 4: Zwischenkreis
- 5: Wechselrichtereinrichtung
- 6: Wechselrichter
- 10: Sensor
- 20: weiterer Sensor
- 50: Analogschaltung
- 51: Wandler
- 101: Ausgeben
- 102: Empfangen
- 103: Empfangen
- 110: Empfangen
- 120: Messen
- 130: Berechnen
- 131: Ermitteln
- 132: Vergleichen
- 135: Berechnen
- 136: Vergleichen
- 140: Betreiben
- 200: Fahrzeug
- 201: Elektroantriebsvorrichtung
- ECU: Steuereinheit
- S10: Sensorsignal
- S20: weiteres Sensorsignal
- S_test: testweises Sensorsignal
- U_out: Spannungsausgangssignal

## Patentansprüche

1. Verfahren zum Betreiben (140) einer Elektroantriebsvorrichtung (201), insbesondere eines Fahrzeugs (200), die eine Elektroantriebsvorrichtung (201) aufweisend:
- einen Elektromotor (1),
- eine Wechselrichtereinrichtung (5), insbesondere aufweisend zumindest zwei Wechselrichter (6), die eingerichtet ist eine, insbesondere dreiphasige, Wechselspannung an den Elektromotor (1) bereitzustellen,
- einen Sensor (10), der eingerichtet ist ein Sensorsignal (S10) bereitzustellen, dass spezifisch ist für eine Drehgeschwindigkeit des Elektromotors (1), insbesondere eines Rotors des Elektromotors (1),
das Verfahren aufweisend:
- Empfangen (110), durch eine Steuereinheit (ECU), eines Sicherungssignals, welches die Steuereinheit (ECU) zum Betreiben (140) des Elektromotors (1) in einem sicheren Betriebsmodus veranlasst,
- Messen (120), insbesondere durch den Sensor (10), eines Sensorsignals (S10), das spezifisch ist für eine Drehgeschwindigkeit des Elektromotors (1),
- Berechnen (130), durch die Steuereinheit (ECU), eines Zeitintervalls für einen Freilauf des Elektromotors (1) in Abhängigkeit von dem Sensorsignal (S10),
- Betreiben (140), durch die Steuereinheit (ECU), der Elektroantriebsvorrichtung (201) in Abhängigkeit von dem Zeitintervall.

2. Verfahren nach Anspruch 1,
**dadurch gekennzeichnet,**
**dass** das Messen (120), ein induktives Messen aufweist und/oder induktionsbasiert durchgeführt wird, wobei insbesondere der Sensor (10), und insbesondere ein weiterer Sensor (20), als induktiver Sensor und/oder Positionssensor ausgestaltet ist, welcher vorzugsweise zumindest teilweise in einem Gehäuse und/oder an einer Drehwelle des Elektromotors (1) angeordnet ist.

3. Verfahren nach einem der vorhergehenden Ansprüche,
**dadurch gekennzeichnet,**
**dass** das Berechnen (130) durch die Steuereinheit (ECU) umfasst:
- Ermitteln (131) einer Rotationsfrequenz und/oder Rotationsgeschwindigkeit des Elektromotors (1), welche insbesondere durch Anfitten einer periodischen Funktion und/oder Mustererkennung ermittelt wird, in Abhängigkeit von
∘ dem Sensorsignal (S10) des Sensors (10) und/oder
∘ eines weiteren Sensorsignals (S20) eines weiteren Sensors (20), welcher insbesondere gegenüber dem Sensor (10) versetzt und/oder verdreht angeordnet ist, beispielsweise um 45° bezüglich einer Drehwelle des Elektromotors (1).

4. Verfahren nach dem vorhergehenden Anspruch,
**dadurch gekennzeichnet,**
**dass** das Berechnen (130), durch die Steuereinheit (ECU), eines Zeitintervalls für einen Freilauf des Elektromotors (1) ein Vergleichen (132) der Rotationsfrequenz und/oder Rotationsgeschwindigkeit mit einem Rotationsschwellwert umfasst, wobei insbesondere
- das Zeitintervall, insbesondere um einen diskreten Zeitschritt, verlängert wird, wenn der Rotationsschwellwert nicht erreicht oder unterschritten wird, oder
- das Zeitintervall beendet wird, wenn der Rotationsschwellwert erreicht oder unterschritten wird.

5. Verfahren nach einem der vorhergehenden Ansprüche,
**dadurch gekennzeichnet,**
**dass** die Elektroantriebsvorrichtung (201) aufweist:
- eine Analogschaltung (50) an welche das Sensorsignal (S10) von dem Sensor (10), oder insbesondere ein weiteres Sensorsignal (S20) eines weiteren Sensors (20), bereitgestellt wird, wobei die Analogschaltung (50) dazu eingerichtet ist in Abhängigkeit von dem Sensorsignal (S10), oder insbesondere dem weiteren Sensorsignal (S20), ein, vorzugsweise analoges, Spannungsausgangssignal (U_out) zu erzeugen, welches insbesondere spezifisch ist für eine Rotationsgeschwindigkeit und/oder Rotationsfrequenz des Elektromotors (1),
das Verfahren aufweisend:
- Erzeugen, durch die Analogschaltung (50), in Abhängigkeit von dem Sensorsignal (S10), oder insbesondere dem weiteren Sensorsignal (S20), eines, vorzugsweise analogen, Spannungsausgangssignals (U_out), und insbesondere
- Übermitteln des Spannungsausgangssignals (U_out) von der Analogschaltung (50) an die Steuereinheit (ECU).

6. Verfahren nach dem vorhergehenden Anspruch,
**dadurch gekennzeichnet,**
**dass** die Analogschaltung (50) einen Wandler (51) aufweist, insbesondere einen Frequenz-Spannungs-Wandler, welcher eingerichtet ist, insbesondere in Abhängigkeit von dem Sensorsignal (S10), oder insbesondere dem weiteren Sensorsignal (S20), das Spannungsausgangssignal (U_out) bereitzustellen, wobei beispielsweise ein Integrieren des Sensorsignals (S10), oder insbesondere des weiteren Sensorsignals (S20), durchgeführt wird.

7. Verfahren nach einem der vorhergehenden Ansprüche,
**dadurch gekennzeichnet,**
**dass**, insbesondere nach einem Übermitteln des Spannungsausgangssignals (U_out) an die Steuereinheit (ECU), die Steuereinheit (ECU), insbesondere zusätzlich und/oder redundant zu dem Berechnen (130), durchführt:
- Berechnen (135), durch die Steuereinheit (ECU), eines Zeitintervalls für einen Freilauf des Elektromotors (1) in Abhängigkeit von dem Spannungsausgangssignal (U_out), wobei insbesondere ein Vergleichen (136) des Spannungsausgangssignals (U_out) mit einem Spannungsschwellwert durchgeführt wird, wobei beispielsweise
∘ ein negativer Spannungsvergleichswert ausgegeben wird, und insbesondere das Zeitintervall, insbesondere um einen diskreten Zeitschritt, verlängert wird, wenn der Spannungsschwellwert nicht erreicht oder überschritten wird, oder
∘ ein positiver Spannungsvergleichswert ausgegeben wird, und insbesondere das Zeitintervall beendet wird, wenn der Spannungsschwellwert erreicht oder unterschritten wird.

8. Verfahren nach den vorhergehenden Ansprüchen 4 und 7,
**dadurch gekennzeichnet,**
**dass**
- das Zeitintervall, insbesondere um einen diskreten Zeitschritt, verlängert wird, wenn
∘ bei dem Vergleichen (132) der Rotationsschwellwert nicht erreicht oder unterschritten wird, und
∘ bei dem Vergleichen (136) ein negativer Spannungsvergleichswert ausgegeben wird, oder
- das Zeitintervall beendet wird, wenn
∘ bei dem Vergleichen (132) der Rotationsschwellwert erreicht oder unterschritten wird, und
∘ bei dem Vergleichen (136) der Spannungsschwellwert erreicht oder unterschritten wird.

9. Verfahren nach einem der vorhergehenden Ansprüche,
**dadurch gekennzeichnet,**
**dass** die Steuereinheit (ECU) eingerichtet ist, insbesondere vor einem Empfangen (110), durchzuführen:
- Ausgeben (101), durch die Steuereinheit (ECU), beispielsweise über einen analogen Testausgang der Steuereinheit (ECU), eines testweisen Sensorsignals (S_test), welches beispielsweise ein vordefiniertes und/oder erwartetes Frequenzspektrum aufweist und/oder das Sensorsignal (S10) simuliert, und insbesondere
- Empfangen (102), durch die Analogschaltung (50) des testweisen Sensorsignals (S_test), und insbesondere
- Empfangen (103) durch die Steuereinheit (ECU) eines testweisen Spannungsausgangssignals von der Analogschaltung (50), wobei die Steuereinheit (ECU) anhand des testweisen Spannungsausgangssignals die Funktionalität der Analogschaltung (50) überprüft, vorzugsweise bevor die Elektroantriebsvorrichtung (201) verwendet wird.

10. Verfahren nach einem der vorhergehenden Ansprüche,
**dadurch gekennzeichnet,**
**dass** das Empfangen (110), durch eine Steuereinheit (ECU), eines Sicherungssignals welches die Steuereinheit (ECU) zum Betreiben (140) des Elektromotors (1) in einem sicheren Betriebsmodus veranlasst, umfasst:
- Initiieren eines Freilaufs der Elektroantriebsvorrichtung (201), insbesondere des Elektromotors (1) der Elektroantriebsvorrichtung (201).

11. Verfahren nach einem der vorhergehenden Ansprüche,
**dadurch gekennzeichnet,**
**dass** das Betreiben (140), durch die Steuereinheit (ECU), der Elektroantriebsvorrichtung (201) in Abhängigkeit von dem Zeitintervall umfasst:
- Initiieren eines aktiven Kurzschlusses in der Elektroantriebsvorrichtung (201), insbesondere wenn das Zeitintervall beendet wird, wodurch vorzugsweise die Elektroantriebsvorrichtung (201), insbesondere der und/oder über den Zwischenkreis (4) und/oder die Wechselrichtereinrichtung (5), zumindest teilweise entladen wird.

12. Verfahren nach einem der vorhergehenden Ansprüche,
**dadurch gekennzeichnet,**
**dass** die Elektroantriebsvorrichtung (201) aufweist:
- einen redundanten Energiespeicher, insbesondere zusätzlich zu einem Energiespeicher (2) der Elektroantriebsvorrichtung (201) und/oder des Fahrzeugs (200), welcher für eine redundante Energieversorgung und/oder Notfallversorgung der Steuereinheit (ECU) und/oder der Elektroantriebsvorrichtung (201) eingerichtet ist, insbesondere des Sensors (10), des weiteren Sensors (20), der Analogschaltung (50) und/oder der Wechselrichtereinrichtung (5),
insbesondere das Verfahren aufweisend:
- Initiieren, durch die Steuereinheit (ECU) einer Energieversorgung durch den redundanten Energiespeicher, vorzugsweise in Abhängigkeit von dem Sicherungssignal, und/oder
- Unterbrechen, durch die Steuereinheit (ECU), einer elektrischen Verbindung zu dem Energiespeicher (2), wodurch vorzugsweise die Steuereinheit (ECU) und/oder die Elektroantriebsvorrichtung (201) von dem Energiespeicher (2) elektrisch entkoppelt wird.

13. Fahrzeug (200), mit einer Elektroantriebsvorrichtung (201) und einer Steuereinheit (ECU), die so angepasst sind, dass sie die Schritte des Verfahrens nach einem der vorhergehenden Verfahrensansprüche 1 bis 12 ausführen.

14. Computerprogrammprodukt, umfassend Befehle, die bei der Ausführung des Computerprogrammprodukts durch ein Fahrzeug (200) gemäß dem vorhergehenden Anspruch, das Verfahren nach einem der vorhergehenden Verfahrensansprüche 1 bis 12 zu implementieren.

15. Computerlesbarer Datenträger, auf dem das Computerprogrammprodukt nach dem vorhergehenden Anspruch gespeichert ist.
